Europäisches Patentamt

European Patent Office

Office européen des brevets

(11) Numéro de publication: **0 208 231 B1**

# FASCICULE DE BREVET EUROPEEN

(45) Date de publication de fascicule du brevet: **26.08.92** (51) Int. Cl.⁵: **G07B 17/02**, H04M 11/00

(21) Numéro de dépôt: **86108930.8**

(22) Date de dépôt: **01.07.86**

(54) **Système de télécontrôle pour machines à affranchir.**

(30) Priorité: **02.07.85 FR 8510081**

(43) Date de publication de la demande:
**14.01.87 Bulletin 87/03**

(45) Mention de la délivrance du brevet:
**26.08.92 Bulletin 92/35**

(84) Etats contractants désignés:
**DE FR GB**

(56) Documents cités:
EP-A- 0 018 081    FR-A- 2 528 647
GB-A- 947 991     GB-A- 2 032 224
GB-A- 2 083 256    GB-A- 2 099 260
US-A- 3 868 640    US-A- 4 097 923
US-A- 4 301 507

(73) Titulaire: **ALCATEL SATMAM**
**113 rue Jean-Marin Naudin**
**F-92220 Bagneux(FR)**

(72) Inventeur: **Le Carpentier, Marc**
**124, avenue Saint-Exupéry**
**F-92160 Antony(FR)**

(74) Mandataire: **Weinmiller, Jürgen et al**
**Lennéstrasse 9 Postfach 24**
**W-8133 Feldafing(DE)**

## Description

La présente invention concerne un système de télécontrôle pour parc de machines à affranchir.

De manière connue les machines à affranchir sont conçues pour permettre à de gros utilisateurs d'imprimer sur le courrier postal à transmettre les timbres correspondants aux taxes à payer par l'envoyeur pour que ce courrier arrive sans frais supplémentaires aux destinataires. Ces machines d'affranchissement assurent une comptabilisation des valeurs d'affranchissement correspondant aux timbres imprimés, leur exploitation est donc très fortement surveillée, car les fortes possibilités de débit de ces machines pourraient entraîner des pertes de rentrées financiaires très importantes pour l'organisme chargé de percevoir les taxes, en cas d'utilisation irrégulière des machines.

Pour ce faire on utilise notamment deux procédés concurrents basés l'un sur le pré-paiement des valeurs à affranchir et l'autre sur le post-paiement. Dans le premier cas, classiquement, les machines à affranchir se bloquent lorsque les valeurs comptabilisées atteignent la valeur payée, ce qui oblige les utilisateurs à réapprovisionner régulièrement les machines, en fonction de leur utilisation, sous peine d'interruption. Dans une forme de réalisation connue, des compteurs transportables assurent le rôle d'instruments de contrôle et ils doivent être enlevés des machines et transportés par l'utilisateur pour leur rechargement par l'Administration postale, ce qui présente de nombreux inconvénients bien connus tant pour les utilisateurs que pour l'Administration.

Dans le second cas, des relevés cycliques détaillés des timbrages effectués sont établis par l'utilisateur pour chaque machine, ils doivent immédiatement être transmis à l'Administration postale, sous peine de sanctions contraignantes et des contrôles directs sur les organes de comptage des machines peuvent être effectués à tout moment par les agents de cette Administration postale.

Un tel procédé présente notamment l'inconvénient d'exiger un travail important de la part de l'utilisateur et de l'Administration postale pour effectuer, comptabiliser et contrôler les relevés, il entraîne pratiquement l'usage de procédures lourdes et grandes consommatrices de temps.

L'un et l'autre des deux procédés évoqués ci-dessus sont donc susceptibles d'être améliorés à l'avantage, tant de l'Administration postale que des utilisateurs, par remplacement de procédures lourdes et peu commodes où l'intervention humaine est nécessaire, par des procédures automatisées moins contraignantes.

Le document GB-A- 2032224 décrit un système permettant de réduire notablement les inconvénients des procédés précédents par mise en liaison des machines à affranchir avec un poste central de télécontrôle par voie téléphonique, chaque machine étant reliée à ce poste par une ligne téléphonique.

Dans un autre document (GB-A- 2083256) il a été proposé de relier des machines à affranchir, géographiquement dispersées mais appartenant à un système de comptabilisation unique, par une liaison bus série partagée entres les machines.

A titre d'amélioration supplémentaire, la présente invention propose un système de télécontrôle par voie téléphonique pour parc de machines à affranchir, géographiquement dispersées selon les besoins des utilisateurs, où ces machines comportent des têtes d'affranchissement dont l'exploitation est contrôlée par un poste central d'organisme centralisateur distant, avec lequel les machines échangent des données, par l'intermédiaire d'au moins une ligne d'un réseau téléphonique.

Selon une caractéristique de l'invention le système comporte au moins un poste local concentrateur relié au poste central par ligne téléphonique et à au moins une machine à affranchir par une liaison en boucle de transmission de données, chaque poste local concentrateur qui est muni de moyens pour assurer les échanges de données, comportant de plus des moyens pour surveiller chacune des machines reliées à lui et pour commander la communication des informations d'exploitation prélevées sur les machines, au niveau de têtes d'affranchissement et par l'intermédiaire de bases individuelles de ces têtes, à des fins de collecte, ainsi que des moyens pour commander la communication au poste central des informations d'exploitation collectées en provenance des machines desservies et pour recevoir, à l'instigation du poste local, les instructions de commande du poste central, selon les instructions précédemment fournies par ledit poste central.

La figure 1 présente un schéma synoptique d'un système de télécontrôle selon l'invention.

La figure 2 présente un schéma synoptique d'une machine d'affranchissement télécontrôlée pour système selon l'invention, cette machine étant reliée en boucle à un poste local avec d'autres machines identiques.

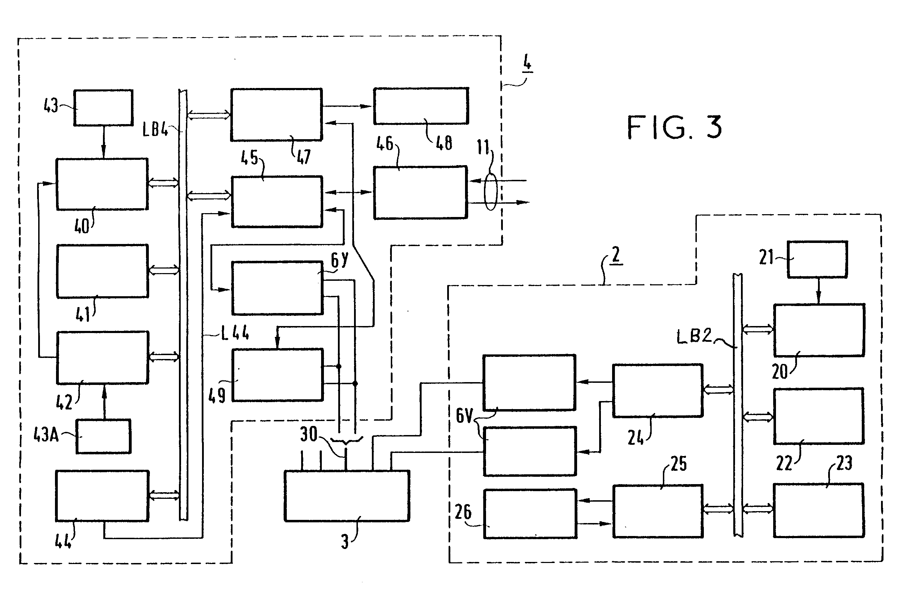

La figure 3 présente un schéma synoptique d'un poste local et d'un poste central pour système selon l'invention.

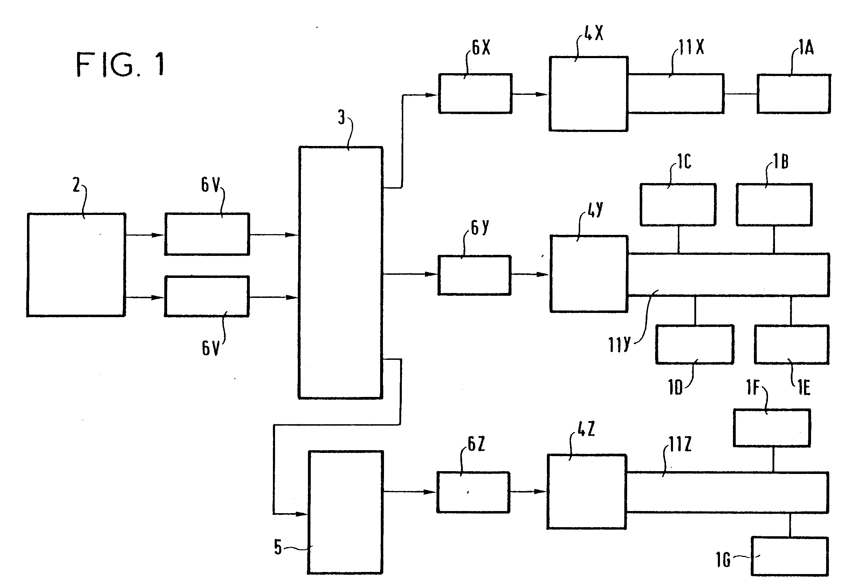

Le système présenté figure 1 est destiné à assurer le contrôle à distance d'une pluralité de machines à affranchir 1A à 1G, à partir d'un poste central 2, dépendant habituellement de l'Administration postale, par l'intermédiaire du réseau téléphonique 3, usuellement public, utilisé pour la transmission des données à échanger entre poste central et machines à affranchir.

En ce but les machines à affranchir 1 géographiquement dispersées selon les besoins des utilisateurs, sont reliées, suivant leur localisation et éventuellement leur nombre, à des postes de concentration intermédiaires 4, dits locaux, permettant chacun d'assurer la liaison, via le réseau téléphonique 3, entre le poste central 2 et une ou plusieurs machines à affranchir 1.

Dans une forme préférée de réalisation, le système de télécontrôle et plus particulièrement les postes locaux 4 sont conçus pour s'adapter à diverses variantes de raccordement téléphonique. Notamment on peut raccorder une machine à affranchir, telle 1A, ou plusieurs, telles 1B, 1C, 1D, 1E, directement au réseau téléphonique public par un même poste local, tel 4X dans un cas et 4Y dans l'autre ; alternativement il est possible de prévoir un raccordement par l'intermédiaire d'un autocommutateur privé, tel 5, permettant l'échange de données entre un poste local, tel 4Z, desservant une ou des machines à affranchir, et le poste central 2, via le réseau téléphonique 3.

Dans un exemple de réalisation, concernant plus partculièrement un système de type télérelevé, le poste central 2 sert de concentrateur pour tout un parc de machines à affranchir, ici symbolisées par les machines référencées 1A à 1G. Ce poste central mémorise et traite toutes les informations de gestion relatives au fonctionnement des machines à affranchir, en vue de la facturation des affranchissements réalisés, sans que soit ici traitée cette facturation proprement dite.

Les différentes machines à affranchir 1 sont placées sous la surveillance du poste local 4 auquel elles sont reliées par une liaison 11, présentée ici sous forme de boucle, telles les boucles 11X, 11Y, 11Z.

Chaque machine à affranchir 1 comptabilise systématiquement à l'aide de compteurs un certain nombre de données relatives aux affranchissements qu'elle effectue et ce indépendamment du poste local 4 auquel elle est reliée. Chaque poste local 4 interroge en permanence les machines à affranchir reliées à lui, en vue de maintenir à jour une image des compteurs de ces machines, quel qu'en soit l'état, de manière à pouvoir fournir à tout instant des informations à jour au poste central 2.

Dans la mesure où les échanges de données entre poste local 4 et poste central 2 s'effectuent par l'intermédiaire du réseau commuté, il est nécessaire de prévoir des équipements de communication 6 permettant d'une part l'établissement automatique des liaisons téléphoniques, d'autre part l'échange des données. De plus des moyens de cryptage des informations transmises sont également prévus pour éviter l'exploitation ou la perturbation du système par des tiers non autorisés.

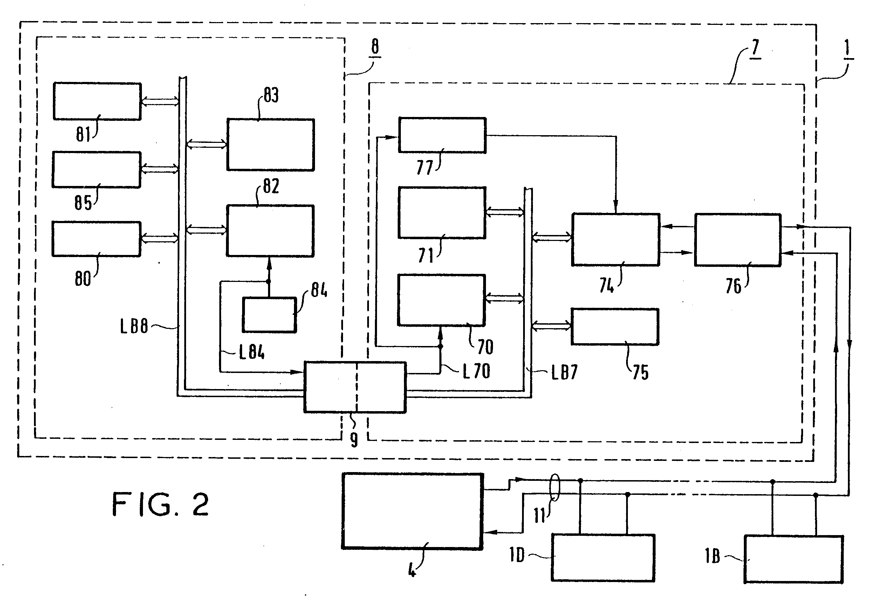

La figure 2 permet de préciser la constitution d'une machine à affranchir 1 télécontrôlée selon l'invention, la machine décrite est composée d'une base 7 s'associant à une tête d'affranchissement 8. La tête d'affranchissement 8, montrée ici, comporte une unité ou tête d'impression 80 chargée d'assurer à la demande le timbrage du courrier postal. De telles unités d'impression sont tout à fait classiques et permettent notamment d'inscrire les dates et lieux d'expédition du courrier et les valeurs d'affranchissement prises en compte ; elles sont classiquement commandées par l'utilisateur au moyen d'un clavier relié à une logique de commande, elles ne sont décrites ici que sommairement dans la mesure où leur structure est bien connue.

Comme indiqué ci-dessus la tête d'affranchissement 8 associe un clavier 81 à l'unité d'impression 80 qu'elle comporte, ainsi qu'une logique de commande classiquement organisée autour d'un processeur 82, associé à des mémoires 83 et piloté par un oscillateur 84 classiquement à quartz.

Un afficheur 85 permet de signaler à l'utilisateur un certain nombre d'informations utiles, notamment le résultat de ces manoeuvres ou éventuellement le choix d'une étape ultérieure dans un processus en cours.

Un ensemble de bus LB8 relie entre eux le clavier, l'unité d'impression, le processeur et ses mémoires, ainsi que l'afficheur, cet ensemble comporte par exemple, un bus de commande, un bus d'adresse et un bus de données distribués selon les besoins, l'ensemble de bus LB8 accède également à la base 7, via un agencement connecteur débrochable 9.

De manière connue les mémoires 83 se subdivisent en mémoire morte et mémoire vive et conservent de manière permanente ou temporaire les programmes et les données que ces progammes utilisent ou engendrent. En particulier les contenus des compteurs nécessaires à la gestion de la tête et les informations permettant son identification sont ainsi sauvegardés,ces informations étant destinées à être transmises vers le poste central du système, via la base 7 et le poste local concerné.

La base 7 est préférablement prévue pour desservir une tête d'affranchissement 8, elle est susceptible de comporter un certain nombres d'équipements annexes, telle par exemple une balance de pesée de plis ou paquets, classiquement associé à une tête d'affranchissement sans y être incorporés ; ces équipements annexes ne sont pas représentés ici dans la mesure où ils ne sont pas directement concernés par l'invention.

La base 7 comporte nécessairement un ensemble de mémorisation et d'échange d'informations constitué par une interface, dite de machine, destinée à permettre les communications de la tête d'affranchissement qu'elle dessert avec un poste local auquel elle est reliée et ce quel que soit la tête choisie.

Cette interface de machine comporte un processeur 70 associé à des mémoires 71 et desservi, avec ces mémoires, par un ensemble de bus LB7 qui est apte à se connecter à l'ensemble de bus LB8 d'une tête d'affranchissement, 8 via l'agencement connecteur débrochable 9. Cet agencement connecteur 9 permet également d'alimenter l'entrée d'horloge du processeur 70 à partir de l'oscillateur 84 de la tête d'affranchissement, via des liaisons L84-L70 raccordées bout à bout, de manière à synchroniser le processeur 70 sur le processeur 82 dont il est l'esclave.

L'ensemble de bus LB7 dessert aussi un circuit émetteur-récepteur synchrone ou asynchrone 74, ce circuit est par exemple de type classiquement appelé USART, il est destiné à assurer le transfert des données entre la tête d'affranchissement et un poste local, via la base 7. Un circuit d'identification 75 est également relié à l'ensemble de bus 72, il sert à individualiser la base au moyen d'un numéro d'identification spécifique permettant sa reconnaissance par le poste local auquel elle est reliée, lorsque ce poste local dessert plusieurs bases 7 et par conséquent plusieurs machines d'affranchissement.

Le circuit USART 74 est associé à un circuit interface d'adaptation 76 lui permettant de se raccorder à un poste local, préférablement par l'intermédiaire d'une boucle destinée à relier plusieurs machines d'affranchissement à un même poste comme le montre les liaisons en boucle 11Y et 11Z de la figure 1. Ce circuit USART 74 est ici synchronisé en émission par l'oscillateur 84, via un diviseur de fréquence 77.

L'interface de machine est prévue pour permettre au poste local de connaître à volonté, à tout instant, l'état de la tête d'affranchissement à laquelle cette interface est reliée et d'agir sur cette tête d'affranchissement lorsque cela est nécessaire. Pour ce faire l'interface machine interroge par des demandes d'interruption successives la tête d'affranchissement 8 qu'elle dessert, afin de pouvoir répondre immédiatement aux demandes du poste local sur la base des informations qu'elle a collectées.

En particulier, la base 7 recopie le plus souvent possible, en mémoires 71, les éléments nécessaires au télérelevé qui sont contenus dans une partie de mémoire vive secourue des mémoires 83 de la tête d'affranchissement. Chaque recopie s'effectue préférablement au cours d'un même cycle machine pour éviter les prises en compte à la volée de valeurs en évolution. Chaque recopie prend par exemple en compte le contenu d'un registre d'index d'affranchissement permettant de déduire la valeur d'affranchissement pour un cycle donné, le contenu du registre de cycles permettant de déduire le nombre de cycles d'affranchissement effectués à une valeur donnée, le contenu d'un registre de fautes concernant la tête d'affranchissement, ces registres étant intégrés dans les mémoires 83.

Dans une forme préférée de réalisation, la tête d'affranchissement communique également son numéro d'identification, lors de la mise sous tension de la machine, tout changement de tête d'affranchissement entraînant une préalable mise hors tension.

L'initialisation de la base 7 s'effectue à réception d'un signal spécifique émanant de la tête d'affranchissement qu'elle dessert, les bases étant inactives en l'absence de tête.

Les échanges entre tête d'affranchissement et base s'effectuent par l'intermédiaire des bus de données intégrés des ensembles de bus LB8, LB7 interconnectés. Ces échanges sont mis en oeuvre sous l'action de commandes transmises par des fils spécifiques du bus de commande inclu dans ces mêmes ensembles de bus.

Les processeurs 70 et 82 sont respectivement en position d'esclave et de maître, le processeur 70 ne pouvant effectuer que des demandes à son maître qui peut intervenir directement à tout instant. Ces deux processeurs sont par exemple des processeurs huit bits de type usuel, identiques ou compatibles.

Le circuit USART 74 assure la fonction d'émetteur-récepteur entre une base 7 traitant des données mises sous forme parallèle qui le comporte et un poste local auquel il est relié par une liaison bidirectionnelle 11 n'acceptant des données que sous forme série.

L'émission de données de la base 7 via la liaison 11 s'effectue à la demande du poste local qui dispose en ce but de moyens d'adressage agissant sur le circuit d'identification 75 de ladite base pour déclencher le processus d'émission.

Dans une forme de réalisation, chaque base 7 dispose d'un numéro d'identification individuel et ne déclenche un processus d'émission, via son circuit USART 74, qu'à partir du moment ou ce numéro est reçu par son circuit d'identification 75 au provenance du poste local.

Un message émis par une base vers un poste local, suite à un appel de celui-ci, comporte par exemple une suite d'informations binaires groupées par octets parmi lesquelles on trouve :

- un octet définissant un masque de cryptage, c'est-à-dire la valeur à appliquer au récepteur pour décrypter le message comportant cet octet ;
- un octet précisant le numéro de la station émettrice et un code d'ordre ;
- un octet d'état relatif aux états respectifs de la base et de la tête lors de l'émission ;
- - un ou plusieurs octets d'identification de tête ;
- des octets correspondants au contenu des registres d'index, de valeur et de faute ;
- un octet de contrôle de message définissant la parité longitudinale du message à l'émission, en vue d'une vérification de sa bonne réception.

La composition des messages et les différents contrôles nécessaires à leur émission sont réalisés par le processeur 70 de manière usuelle et ne seront donc pas décrits plus avant.

L'émission des messages par le circuit USART 74 s'effectue sous forme asynchrone série sur la ligne sortante de la liaison 11, via l'interface d'adaptation 76 comme indiqué plus haut ; elle est mise en oeuvre par le processeur 70 suite à la réception d'un message émanant du poste local et contenant le numéro d'identification de la base comportant ce circuit USART.

L'horloge présidant à l'émission des données par la base est obtenue par division du signal d'horloge fourni par l'oscillateur 84, de même que celle nécessaire à la réception des données émanant du poste local. La fréquence du signal utilisé pour la réception nettement plus élevée que celle de l'horloge d'émission pour permettre un échantillonnage correct. Les fréquences d'émission sont par exemple de l'ordre de 12 kHz pour la base et pour le poste local, la fréquence d'échantillonnage en réception étant ici seize fois plus élevée.

L'interface d'adaptation 76 est essentiellement destinée à adapter les signaux émanant du circuit USART 74, vers le poste local, aux caractéristiques de la liaison utilisée et au protocole d'échange choisi, par exemple suivant la norme RS422, c'est en ce cas une classique interface de boucle.

Différents modes de couplage des bases 7, contrôlées par un poste local, avec ce poste local sont susceptibles d'être envisagés, outre une liaison différentielle type RS422 évoquée ci-dessus, il est bien entendu possible de prévoir une liaison directe pour une base proche d'un poste local, une liaison du type boucle de courant, une liaison optique ou par fibre optique, etc...

La constitution de l'interface d'adaptation 76 est donc susceptible de varier grandement en fonction du mode de couplage choisi.

Comme on l'a vu, le poste local 4Y est destiné à contrôler une ou plusieurs machines à affranchir reliées à lui par l'intermédiaire d'une liaison en boucle 11.

Ce poste local 4Y est organisé autour d'un processeur 40 chargé de gérer les échanges avec d'une part les machines à affranchir, d'autre part un poste central distant 2, auquel ce poste local est apte à se relier par l'intermédiaire d'un réseau téléphonique 3, à au moins une ligne téléphonique 30 duquel il a accès.

Le processeur 40 est par exemple un microprocesseur huit bits classique, il est classiquement associé à un oscillateur 43 et un ensemble de mémoires 41 comprenant notamment une mémoire vive qui permet la sauvegarde de données essentielles en cas de coupure de la tension d'alimentation en énergie électrique du poste local. Cette sauvegarde s'accompagne d'un blocage temporaire du microprocesseur en fin du cycle de travail en cours, pour la durée de l'absence de tension.

Un dispositif chien de garde 42 est également associé au processeur 40 de manière à vérifier que ce processeur est opérationnel, car dans la pratique le poste local est transparent pour l'utilisateur qui n'a pas à se préoccuper de son fonctionnement, de ce fait il est nécessaire de l'autocontrôler.

En ce but le dispositif chien de garde 42 reçoit les signaux d'horloge d'un oscillateur de surveillance 43A, ici de type RC, afin d'assurer un comptage de temps indépendant et cyclique. Le logiciel chargé dans le processeur 40 est conçu de manière à passer cycliquement par une étape déterminée se reproduisant avec une périodicité inférieure à la période fixe donnée par le dispositif chien de garde 42 qui envoie une interruption au processeur 40 si l'étape déterminée n'a pas été atteinte, lorsque lui même a terminé son comptage.

Tout débordement entraîne un marquage de faute susceptible d'être communiqué en poste central 2 et éventuellement la préparation par le processeur de données en vue d'établir un diagnostic.

Les mémoires 41 des postes locaux 4 sont régulièrement contrôlées en l'absence de tâches urgentes à traiter. Ces contrôles s'effectuent à l'aide de moyens de test de parité longitudinale comparant la parité longitudinale calculée sur la mémoire programme avec sa valeur mémorisée préalablement, cette valeur résultant par exemple d'un calcul fait lors de la génération du système.

Des moyens de test d'écriture permettent de contrôler la mémoire de données, ils permettent d'inscrire dans chaque cellule de mémoire, l'inverse de son contenu, sous masque d'interruption, puis de vérifier l'exécution de cette inscription, avant de ramener la cellule concernée à l'état initial.

Une base de temps 44 est également associée au processeur 40 en vue de fournir d'une part des interruptions récurrentes permettant une gestion en temps réel et d'autre part les fréquences de transmission nécessaires pour les échanges avec les machines à affranchir et avec le poste central.

Ces échanges s'effectuent par l'intermédiaire d'un ensemble d'émetteurs-récepteurs asynchrones 45 composé ici de deux unités chargés respectivement des liaisons, l'une avec les machines d'affranchissement 1, via la liaison en boucle 11, l'autre avec le poste central 2, via le réseau téléphonique.

Dans une forme de réalisation cet ensemble d'émetteurs-récepteurs 45 est réalisé à l'aide d'un circuit unique regroupant deux émetteurs-récepteurs indépendants recevant individuellement via une liaison 44, les signaux d'horloge d'émission et de réception fournis par la base de temps 44.

L'un des émetteurs-récepteurs indépendants est relié par une interface de boucle 46 à la boucle 11 desservant les machines à affranchir affectées au poste local qui le comporte.

Cette interface de boucle 46 assure les adaptations nécessaires à l'application du protocole de communication choisi, ici selon les normes RS422, ces adaptations connues ne seront pas précisées ici.

Le second des émetteurs indépendants est relié au modem 6Y et dispose en ce but des liaisons de commande et de transmission de données nécessaires.

Un circuit d'entrées-sorties 47 est également relié à l'ensemble de bus LB4 qui dessert le processeur 40, ses mémoires 41, le circuit chien de garde 42, la base de temps 44 et l'ensemble d'émetteurs-récepteurs 45. Ce circuit d'entrées-sorties 47 possède deux lignes bidirectionnelles, il est relié à un agencement de visualisation 48 et à un coupleur téléphonique 49.

L'une des deux lignes assure essentiellement les entrées, elle reçoit du coupleur téléphonique 49 des signaux caractéristiques des fréquences de signalisation téléphoniques lorsque celles-ci sont détectées. La seconde des deux lignes assure essentiellement les sorties et produit des commandes d'affichage à destination de l'agencement de visualisation 48, une commande de numérotation à destination du coupleur téléphonique 49 pour l'envoi du numéro d'appel du poste central 2 et une commande de rebouclage pour l'auto-test du modem 6Y.

L'agencement de visualisation 48 fournit par exemple des indications relatives aux défauts détectés par le logiciel, notamment sur les fautes relevées lors de contrôles concernant les mémoires.

Le coupleur téléphonique 49 est relié au réseau téléphonique 3 par l'intermédiaire d'une ligne 30 sur laquelle il est connecté en parallèle avec le modem 6Y, afin d'assurer les opérations de mise en liaison de ce modem 6Y avec l'un des modems 6V du poste central, via le réseau téléphonique.

En ce but le coupleur téléphonique 49 comporte des moyens permettant de boucler la ligne téléphonique 30 sur elle-même en vue d'obtenir l'envoi d'une tonalité d'invitation à numéroter du réseau téléphonique 3. Le coupleur téléphonique 49 comporte aussi des moyens de reconnaissance des différentes tonalités de signalisation publiques ou privées susceptibles d'être reçues lors d'une communication, afin de permettre au processeur de prendre les mesures nécessaires, notamment de connecter le modem Y à la ligne téléphonique à réception de la tonalité de disponibilité émise par le poste central en réponse à un appel. Le coupleur téléphonique 49 comporte encore des moyens pour générer les signaux de numérotation nécessaires à l'envoi du numéro d'appel du poste central sur la ligne téléphonique 30, par exemple par rupture cadencée de boucle. Le poste central 2 est relié au réseau téléphonique par au moins une et préférablement deux lignes téléphoniques auxquelles il est respectivement relié par l'intermédiaire de modems 6V compatibles avec les modules 6Y des postes locaux qu'il supervise.

Ce poste central 2 est organisé autour d'un processeur 20 classiquement piloté par un oscillateur 21 qui fournit également les signaux d'horloge nécessaires aux transmissions.

Un ensemble de mémoires 22 est également associé au processeur 20 pour la mémorisation du programme de gestion permettant d'au moins prétraiter les données fournies par les postes locaux 4, et pour celle, temporaire, des données fournies par ces postes ou à leur fournir.

Une base de temps 23 assure périodiquement l'envoi d'au moins une interruption au processeur 20 pour l'accomplissement de tâches périodiques et pour la mise à jour d'un calendrier permettant de dater les évènements recensés.

Un ensemble d'émetteurs-récepteurs synchronisés 24, comportant par exemple trois émetteurs-récepteurs permet de dialoguer simultanément avec deux postes locaux 4 et avec au moins une unité d'un ensemble de classiques périphériques de gestion 26, tel que par exemple un terminal à clavier et écran destiné aux échanges d'information avec un opérateur humain.

Classiquement un ensemble de bus LB2 relie entre eux le processeur 20, ses mémoires 22, sa base de temps 23, l'ensemble d'émetteurs-récepteurs 24 et un ensemble de classiques contrôleurs de périphériques 25 desservant les périphériques de l'ensemble de gestion 26.

Selon l'invention, si les communications avec le poste central 2 sont établies à la demande des postes locaux 4, c'est cependant ce dernier qui est le maître à partir du moment où les communications sont établies, c'est aussi lui qui assure l'initialisation par téléchargement des postes locaux et qui fixe la période et la fréquence des vacations pour chaque poste local.

L'absence d'appel du poste central par un poste local est détectée par le processeur 20 du poste central qui informe les opérateurs via l'ensemble de périphériques de gestion afin que ceux-ci prennent les mesures nécessaires.

L'absence d'interrogation d'une machine d'affranchissement par le poste local qui la supervise entraîne le blocage de cette machine et en conséquence une réaction de l'utilisateur.

Tant dans les échanges entre poste central et poste local que dans ceux entre poste local et machines d'affranchissement, il est prévu un contrôle par comptage de temps tant dans l'équipement maître que dans l'équipement esclave. Chaque équipement maître émetteur commençant une émission arme une temporisation qui doit couvrir le temps d'émission et un temps maximum d'attente de réponse. Si cette temporisation arrive à échéance en premier, le message est répété au moins une fois.

Chaque équipement esclave arme également une temporisation à réception du premier caractère d'un message, cette temporisation est inférieure à la précédente afin de permettre une réinitialisation de l'agencement de réception de l'équipement esclave, si cette temporisation arrive à échéance avant que le décompte du nombre de caractères du message reçu ne soit nul, sachant que ce nombre est prédéterminé.

Dans l'exemple de réalisation proposé, le dialogue entre deux équipements, qui se fait en mode asynchrone, prévoit la transmission de chaque caractère au moyen de onze éléments binaires comprenant huit éléments représentatifs du caractère sous forme codée, un élément de parité, et deux éléments binaires l'un de départ et l'autre de fin entourant les neuf autres.

Chaque message débute par un octet correspondant à un masque de cryptage permettant d'éviter l'écriture et/ou la lecture d'un message par un tiers non autorisé, tant pour les échanges entre machines à affranchir et poste local, que pour ceux entre un poste local et le poste central.

En ce but deux équipements en liaison disposent d'une même clé secrète privée CP et d'une même table de clés TC où des valeurs d'accès sont rangées dans un ordre quelconque.

A l'aide d'un compteur aléatoire CX, le processeur de l'équipement émetteur réalise la fonction $M = f(CX, CP)$, le compteur CX permet également de pointer une clé d'accès CA dans la table de clés TC et celle-ci permet au processeur de l'équipement de réaliser une fonction $K = f(CA(CX),donnée)$ sur les données à transmettre.

A chaque caractère des données d'un même message, le pointeur est incrémenté et fournit une valeur CA différente pour le caractère suivant. En conséquence deux caractères identiques d'un même message sont cryptés différemment et deux messages identiques le sont également.

L'émission d'un message se fait dans l'ordre suivant :

M, $K(CX0)$, $K(CX1)$, ... $K(CXn)$

Le récepteur trouve la valeur de CX en réalisant la fonction $CX = f(M. CP)$ et les valeurs des données par la fonction $Données = f(K, CA(CX))$.

Chaque poste local se trouve donc en possession de deux couples différents comprenant une table des clés TC et une clé privée CP, l'un pour les échanges entre poste local et machine et l'autre pour les échanges entre poste local et poste central.

A partir du moment où un échange n'est pas accompli selon le protocole établi entre équipement maître et équipement esclave, l'équipement maître est apte à prendre les mesures conservatoires nécessaires, ce qui se traduit éventuellement au niveau des échanges entre un poste local et une machine à affranchir par le blocage de la machine.

Lors de l'initialisation d'une machine ou en cas de modifications à communiquer aux têtes d'affranchissement, le poste central est apte à effectuer un téléchargement, en transmettant les informations au poste local concerné lors d'une vacation initiée par ce poste local, éventuellement à la demande du poste central.

Le poste local informe à son tour la ou les machines concernées, éventuellement en différé, à l'instant désiré.

A partir des informations fournies par les machines aux postes locaux et de ceux-ci au poste central, ce dernier établit par exemple un journal partiel indiquant notamment pour chaque client le type de suivi effectué en fonction de sa périodicité, le nombre de machines concernées, le nombre de communications téléphoniques établies par le poste local concerné, les valeurs cumulées et jour par jour des compteurs d'affranchissement et de cycles avec report éventuel de journaux précédents, les totaux des affranchissements journaliers et les fautes relevées.

## Revendications

1. Système de télécontrôle, pour parc de machines à affranchir (1) qui sont géographiquement dispersées selon les besoins des utilisateurs et qui comportent des têtes d'affranchissement (8) dont l'exploitation est contrôlée par un poste central (2) d'un organisme centralisateur distant avec lequel les machines échangent des données, par l'intermédiaire d'au moins une ligne d'un réseau téléphonique, ledit système étant caractérisé en ce qu'il comporte au moins un poste local concentrateur (4) relié au poste central par ligne téléphonique (30) et à au moins une machine à affranchir par une liaison en boucle de transmission de données (11), chaque poste local concentrateur qui est muni de moyens pour assurer les échanges de données (45, 46, 6Y, 49), comportant de plus des moyens (42) pour surveiller chacune des machines reliées à lui et pour commander la communication des informations d'exploitation prélevées sur les machines, au niveau de têtes d'affranchissement (8) et par l'intermédiaire de bases individuelles (7) de ces têtes, à des fins de collecte, ainsi que des moyens (40, 41) pour commander la communication au poste central des informations d'exploitation collectées en provenance des machines desservies et pour recevoir, à l'instigation du poste local, des instructions de commande du poste central, selon des instructions précédemment fournies par ledit poste central.

2. Système de télécontrôle selon la revendication 1, pour machines à affranchir dotées de têtes d'affranchissement (8) comportant chacune une logique de commande organisée autour d'un processeur (82) associé à des mémoires (83) par un premier ensemble de bus d'échange (LB8), caractérisé en ce que chaque base (7) destinée à porter une tête d'affranchissement (8) comporte un ensemble de mémorisation et d'échange d'information destiné à relier la tête d'affranchissement portée par ladite base avec le poste local auquel ladite base est reliée par une liaison de transmission de données (11), ledit ensemble de mémorisation et d'échange assurant d'une part une transmission sous forme synchrone entre un processeur (70) et des mémoires (71) qu'il comporte et le processeur et les mémoires de la tête, via un second ensemble de bus d'échange (LB7) se raccordant au premier ensemble de bus d'échange (LB8) de la base via un connecteur commun (9), et assurant d'autre part une transmission sous forme synchrone ou asynchrone avec le poste local concerné, par l'intermédiaire d'un circuit émetteur-récepteur (74) synchrone ou asynchrone inséré entre le second ensemble de bus d'échange (LB7) et un interface d'accès (76) et relié à la liaison de transmission de données (11) desservant le poste local.

3. Système de télécontrôle selon la revendication 2, caractérisé en ce que le processeur (70) d'une base (7) qui est destiné à gérer les échanges d'information entre un poste local (4) auquel cette base est reliée et une tête d'affranchissement (8) est l'esclave du processeur (82) de cette tête d'affranchissement avec laquelle il est synchrone, un oscillateur (84) contenu dans ladite tête d'affranchissement pilotant les deux processeurs (70, 82).

4. Système de télécontrôle selon la revendication 1 , caractérisé en ce que chaque poste local (4) comporte d'une part une unité d'émetteur-récepteur (45) synchrone ou asynchrone reliée par une interface d'accès (46) à une liaison de transmission de données desservant les bases auxquelles ce poste local est connecté, d'autre part un coupleur téléphonique (49) et un modem (6Y) reliés en parallèle à une même ligne téléphonique (30) d'accès à un réseau téléphonique (3) donnant accès au poste central (2), ainsi qu'une logique de commande (40 à 44, LB4) chargée de la mémorisation temporaire et de la gestion des échanges.

5. Système de télécontrôle selon la revendication 4, caractérisé en ce que le modem (6Y) et le coupleur téléphonique (49) d'un poste local sont respectivement reliés à un ensemble de bus (LB4) de la logique de commande de ce poste local, respectivement par une unité d'émetteur-récepteur (45) synchrone ou asynchrone de données et par une unité d'entrées-sorties (47) pour les signaux, sous forme décimale ou multifréquence, correspondants à la signalisation téléphonique.

6. Système de télécontrôle selon la revendication 4, caractérisé en ce que le poste central (2) comporte des modems (6V) compatibles avec ceux des postes locaux pour l'échange de données sous forme décimale ou multifréquence par l'intermédiaire d'un réseau téléphonique et un processeur (20) agissant en maître vis-à-vis des processeurs (40) des postes locaux, reliés audit poste central, à partir du moment où ceux-ci ont établi une liaison téléphonique avec ce poste central.

7. Système de télécontrôle selon la revendication 1, caractérisé en ce que chaque poste local (4) qui est piloté par un oscillateur (43) et qui comporte une base de temps (44) de gestion en temps réel, notamment des interrogations des bases, comporte également un dispositif de chien de garde (42) piloté par un oscillateur indépendant (43A) et apte à générer une interruption pour un processeur de gestion (40) de ce poste afin d'assurer un auto-contrôle et en ce que ledit processeur (40) assure une interrogation individuelle cyclique des bases placées sous sa surveillance en vue d'assurer le blocage des machines d'affranchissement dont la base ne répond pas correctement aux interrogations, ces machines se bloquant elles-mêmes en cas d'interrogation erronée et en cas d'absence d'interrogation dans les conditions prévues.

8. Système de télécontrôle selon la revendication 7, caractérisé en ce qu'il comporte des moyens de test de parité longitudinale comparant la parité longitudinale calculée sur la mémoire de programme du processeur de gestion d'un poste local, lors d'un test, avec sa valeur mémorisée préalablement, ainsi que des moyens de test d'écriture en mémoire de données, permettant d'inscrire dans chaque cellule de mémoire, l'inverse de son contenu, de vérifier l'exécution de cette inscription, puis de ramener la cellule concernée à son état initial, lesdits moyens de test étant activés en permanence en l'absence d'autres tâches à effectuer.

## Claims

1. A remote control system for a plurality of franking machines (1) which are geographically dispersed to meet the needs of users and which include franking heads (8) whose use is monitored by a remote central station of a supervising organization (2), with which the machines exchange data via at least one line of a telephone network, characterized in that the system comprises at least a local concentrator (4) connected to the central station via a telephone line (30) and to at least one franking machine via a looped data transmission link (11), each local concentrator station being fitted with means (45, 46, 6Y, 49) for ensuring the data exchanges and further including means (42) for monitoring each of the machines connected to the station and for commanding the communication of operative information derived from the machines at the franking heads (8) and via the individual bases (7) of said heads for the purpose of collection, as well as means (40, 41) for commanding the communication of the operative information collected as issuing from the serviced machines to the central station, and for receiving, on request of the local station, command instructions from the central station, according to instructions precedingly delivered by said central station.

2. A remote control system according to claim 1, for franking machines provided with franking heads (8), each of which includes a central logic circuit based on a processor (82) associated with memories (83) via a first interchange bus assembly (LB8), characterized in that each base (7) intended to carry a franking head (8) includes an assembly for storing and exchanging data intended for connecting the franking head carried by said base with the local station to which said base is connected by a data transmission link (11), said assembly for memorizing and exchanging data serving firstly to provide synchronous transmission between a processor (70) and memories (71) which it includes and the processor and the memories of the head via a second interchange bus assembly (LB7) connected to the first exchange bus assembly (LB8) of the base via a common connector (9), and serving secondly to provide transmission in synchronous form or asynchronous form with the local station concerned via a synchronous or asynchronous transmitter/receiver circuit (74) inserted between the second interchange bus assembly (LB7) and an access interface (76) and connected to the data transmission link (11) serving the local station.

3. A remote control system according to claim 2, characterized in that the processor (70) of a base (7) which is intended to manage information exchanges between a local station (4) to which said base is connected and a franking head (8), is slaved to the processor (82) of said franking head with which it is synchronous, an oscillator (84) contained in said franking head clocking both processors (70, 82).

4. A remote control system according to claim 1, characterized in that each local station (4) comprises firstly a synchronous or asynchronous transmitter/receiver unit (45) connected via an access interface (46) to a data transmission link serving the bases to which said local station is connected, and secondly a telephone coupler (49) and a modem (6Y) connected in parallel to a common telephone line (30) connected to a telephone network (3) giving access to the central station (2), together with a control logic circuit (40 to 44, LB4) for managing and temporarily storing said data exchanges.

5. A remote control system according to claim 4, characterized in that the modem (6Y) and the telephone coupler (49) of a local station are respectively connected to a bus assembly (LB4) of the control logic circuit of that local station, respectively via a synchronous data transmitter/receiver unit (45) and by an input/output unit (47) for the signals in decimal or multifrequency form corresponding to telephone signalling standard.

6. A remote control system according to claim 4, characterized in that the central station (2) includes modems (6V) compatible with the modems in the local stations for interchanging data in decimal or multifrequency form via a telephone network, and a processor (20) acting as a master relative to the processors (40) of the local stations connected to said central station once said local stations have established a telephone link with said central station.

7. A remote control system according to claim 1, characterized in that each local station (4) which is controlled by an oscillator (43) and which includes a time base (44) for real time operation, in particular for interrogating the bases, also includes a watchdog device (42) driven by an independent oscillator (43A) and suitable for generating an interrupt for the processor (40) of said station in order to provide self-checking, and in that said processor (40) provides cyclic individual interrogation of the bases under its surveillance in order to cause the franking machines to become locked if their bases do not respond correctly to the interrogations, said franking machines locking up on their own accord if they are erroneously interrogated or if they are not interrogated under predetermined conditions.

8. A remote control system according to claim 7, characterized in that it includes longitudinal parity test means for comparing the longitudinal parity calculated in the program memory of the management processor of a local station during a test with its previously stored value, together with data memory write test means for writing the inverse of the contents of each memory cell into said cell, for verifying that said write operation has been performed, and then for returning the cell concerned to its initial state, said test means being permanently activated in the absence of other tasks to be performed.

## Patentansprüche

1. Fernsteuerungssystem für eine Mehrzahl von Frankiermaschinen (1), die geographisch entsprechend den Bedürfnissen der Benutzer verteilt sind und Frankierköpfe (8) aufweisen, deren Benutzung von einer Zentralstation (2) eines entfernten Zentralorgans gesteuert wird, mit welchen die Maschinen über mindestens eine Leitung eines Fernsprechnetzes Daten austauschen, dadurch gekennzeichnet, daß das System mindestens eine lokale Konzentratorstation (4) aufweist, die mit der Zentralstation über Telefonleitung (30) und mit mindestens einer Frankiermaschine über eine schleifenförmige Datenübertragungsstrecke (11) verbunden ist, wobei jede lokale Konzentratorstation, die mit Einrichtungen (45, 46, 6Y, 49) zur Durchführung des Datenaustauschs ausgestattet ist, zusätzlich Einrichtungen (42) zur Überwachung jeder an sie angeschlossenen Maschine und zur Steuerung der Übermittlung der den Maschinen an den Frankierköpfen (8) über individuelle Sockel (7) zum Zweck der Sammlung entnommenen Benutzungsdaten, sowie Einrichtungen (40, 41) zur Steuerung der Übermittlung der von den betreuten Maschinen gelieferten, gesammelten Benutzungsinformationen und zum Empfang von Steueranweisungen der Zentralstation auf Anforderung der lokalen Station entsprechend den zuvor von der Zentralstation gelieferten Anweisungen aufweist.

2. Fernsteuersystem nach Anspruch 1 für Frankiermaschinen mit Frankierköpfen (8), die je eine mit einem Prozessor (82) und Speicher (83) sowie einem diesen zugeordneten Datenaustauschbus (LB8) ausgerüstete Steuerlogik aufweist, dadurch gekennzeichnet, daß jeder für die Aufnahme eines Frankierkopfs (8) bestimmte Sockel (7) eine Speicher- und Informationsaustauschgruppe aufweist, die zum Verbinden des von dem Sockel getragene Frankierkopfs mit der lokalen Station vorgesehen ist und mit der der Sockel über eine Datenübertragungsstrecke (11) verbunden ist, wobei die Speicher- und Austauschgruppe einerseits eine synchrone Übertragung zwischen einem Prozessor (70) und Speichern (71), die er aufweist, und dem Prozessor und den Speichern des Kopfes über eine zweite Datenaustauschbusgruppe (LB7) bewirkt, die an die erste Austauschbusgruppe (LB8) des Sockels über ein gemeinsames Verbindungsglied (9) angeschlossen ist, und andererseits eine synchrone oder asynchrone Übertragung mit der betroffenen lokalen Station über eine synchrone oder asynchrone Sender-Empfängerschaltung (74) bewirkt, die zwischen die zweite Austauschbusgruppe (LB7) und eine Zugriffsschnittstelle (76) eingefügt und mit der die lokale Station bedienenden Datenübertragungsstrecke 11 verbunden ist.

3. Fernsteuersystem nach Anspruch 2, dadurch gekennzeichnet, daß der Prozessor (70) eines Sockels (7), der den Informationsaustausch zwischen einer lokalen Station (4), an die die Basis angeschlossen ist, und einem Frankierkopf (8) abwickelt, funktionell vom Prozessor (82) dieses Frankierkopfs abhängig ist, mit dem er synchron arbeitet, wobei ein im Frankierkopf enthaltener Oszillator (84) die beiden Prozessoren (70, 82) steuert.

4.    Fernsteuersystem nach Anspruch 1, dadurch gekennzeichnet, daß jede lokale Station (4) zum einen eine synchrone oder asynchrone Sender-Empfägereinheit (45), die über eine Zugriffsschnittstelle (46) mit einer Datenübertragungsstrecke verbunden ist, welche die Sockel bedient, an die diese lokale Station angeschlossen ist, und zum anderen einen Telefonkoppler (49) und ein Modem (6Y), die parallel an eine gemeinsame Fernsprechleitung (30) angeschlossen sind, die Zugang zu einem Telefonnetz (3) und zur Zentralstation (2) bietet, sowie eine Steuerlogik (40 bis 44, LB4) aufweist, die mit der zeitweiligen Speicherung und Abwicklung der Austauschvorgänge befaßt ist.

5.    Fernsteuersystem nach Anspruch 4, dadurch gekennzeichnet, daß das Modem (6Y) bzw. der Telefonkoppler (49) einer lokalen Station jeweils an eine Busgruppe (LB4) der Steuerlogik dieser lokalen Station über eine synchrone oder asynchrone Sender-Empfängereinheit (45) bzw. über eine Eingangs-Ausgangseinheit (47) für die Signale in Dezimal- oder Mehrfrequenzform entsprechend der Fernmeldesignalisation angeschlossen sind.

6.    Fernsteuersystem nach Anspruch 4, dadurch gekennzeichnet, daß die Zentralstation (2) Modems (6V), die mit denen der lokalen Stationen kompatibel sind, für den Datenaustausch in Dezimal- oder Mehrfrequenzform über ein Fernsprechnetz und einen Prozessor (20) aufweist, der in Bezug auf die Prozessoren (40) der lokalen Stationen, die an die Zentralstation angeschlossen sind, von dem Moment an als Leitprozessor fungiert, in dem diese eine Telefonverbindung mit der Zentralstation hergestellt haben.

7.    Fernsteuersystem nach Anspruch 1, dadurch gekennzeichnet, daß jede lokale Station (4), die von einem Oszillator (43) gesteuert wird und eine Echtzeit-Vervaltungszeitbasis (44), insbesondere für die Abfrage der Sockel aufweist, ebenfalls eine Überwachungseinrichtung (42) aufweist, die von einem unabhängigen Oszillator (43A) gesteuert wird und ein Unterbrechungssignal für einen Verwaltungsprozessor (40) dieser Station erzeugen kann, um eine Selbstüberwachung zu bewirken, und daß dieser Prozessor (40) eine zyklische individuelle Abfrage der seiner Überwachung unterstehenden Sockel durchführt, um die Blockierung der Frankiermaschinen zu bewirken, deren Sockel nicht richtig auf die Befragungen antwortet, wobei sich diese Maschinen bei fehlerhafter Abfrage und bei fehlender Abfrage unter den vorgesehenen Bedingungen selbst blockieren.

8.    Fernsteuersystem nach Anspruch 7, dadurch gekennzeichnet, daß es Einrichtungen zum Testen der Längsparität aufweist, die im Verlauf eines Tests die im Programmspeicher des Verwaltungsprozessors einer lokalen Station berechnete Längsparität mit ihrem vorher gespeicherten Wert vergleichen, und daß es Einrichtungen zum Testen des Einschreibens von Daten in einen Speicher aufweist, die es ermöglichen, in jeder Speicherzelle den inversen Wert ihres Innalts einzuschreiben, die Durchführung dieser Einschreibung zu überprüfen und dann die betreffende Zelle wieder in ihren Anfangszustand zurückzuversetzen, wobei die Testeinrichtungen bei fehlenden anderen auszuführenden Aufgaben dauernd aktiviert sind.

FIG. 1

FIG. 2

FIG. 3

EP 0 208 231 B1